# EUROPÄISCHE PATENTSCHRIFT

(11) **EP 4 405 575 B1**
(45) Veröffentlichungstag und Bekanntmachung des Hinweises auf die Patenterteilung: **30.04.2025**
(21) Anmeldenummer: 22790283.0
(22) Anmeldetag: 19.09.2022
(51) Int. Cl.: F01P 3/18, F01P 11/06, F01P 11/10, F01P 5/06, F01P 5/04, F01P 7/08, B60K 11/02, B60K 11/00, B60K 11/04

(54) **VERFAHREN ZUM REINIGEN EINER KÜHLVORRICHTUNG DURCH RÜTTELN**
METHOD FOR CLEANING A COOLING DEVICE BY SHAKING
PROCÉDÉ DE NETTOYAGE D'UN DISPOSITIF DE REFROIDISSEMENT PAR VIBRATION

(30) Priorität: 21.09.2021 DE 102021124391
(43) Veröffentlichungstag der Anmeldung: 31.07.2024
(73) Patentinhaber: MAN Truck & Bus SE, 80995 München (DE)
(72) Erfinder: KALAß, Rainer, 91189 Rohr (DE)
(74) Vertreter: v. Bezold & Partner Patentanwälte - PartG mbB
(86) Internationale Anmeldenummer: PCT/EP2022/075907
(87) Internationale Veröffentlichungsnummer: WO 2023/046619

(56) Entgegenhaltungen:
- JP-A- H0 419 322
- US-A- 6 126 079
- US-A1- 2004 113 573
- US-B1- 8 967 092

## Beschreibung

Die Erfindung betrifft ein Verfahren zum Reinigen einer Kühlvorrichtung für ein Kraftfahrzeug sowie eine Kühlvorrichtung, die ausgebildet ist, das Verfahren durchzuführen. Ferner betrifft die Erfindung ein Kraftfahrzeug mit einer ebensolchen Kühlvorrichtung.

Zum allgemeinen Stand der Technik wird auf die JP H04 19322 A verwiesen.

Die JP H04 19322 A offenbart einen Maschinenraum, umfassend einen Motor, einen Kühler, einen Lüfter zur Kühlung des Kühlers, einen hydraulisch angetriebenen Motor zum Antrieb des Lüfters und eine Steuereinheit zum Umschalten der Drehrichtung des Motors. Der hydraulisch angetriebene Motor, der in beide Richtungen drehbar ist, ist mit einem Hydraulikkreislauf verbunden, der aus einer Ölpumpe, einem Ölschaltventil besteht. Wenn der pneumatische Druck eines Raumabschnitts unter einem bestimmten Wert liegt oder die Wassertemperatur im Kühler höher als ein bestimmter Wert ist, sendet die Steuerung ein Signal an das Ölumschaltventil, um den Fluss des Drucköls im Hydraulikkreislauf in die umgekehrte Richtung zu schalten und so den hydraulisch angetriebenen Motor und das Gebläse in die umgekehrte Richtung zu drehen, um dadurch den Staub im Kühler zu entfernen.

Zur Kühlung von Fahrzeugkomponenten, wie z. B. Traktionsbatterie, Motor etc., ist der Einsatz von Kühlkreisläufen allgemein bekannt. Hierbei wird Wärme von den zu kühlenden Fahrzeugkomponenten mittels entsprechender Kühl- bzw. Kältemittel (z. B. Wasser oder Öl) abgeführt und an die Fahrzeugumgebung abgegeben. Der Wärmeaustausch zwischen dem Kühl- bzw. Kältemittel und der Fahrzeugumgebung erfolgt dabei üblicherweise mittels eines vom Fahrtwind durchströmten Wärmetauschers bzw. Kühlers. Dieser kann z. B. als Rohr/Rippen-System, einem sog. Kühlernetz ausgebildet sein. Um insbesondere bei Fahrten mit langsamer Geschwindigkeit und/oder bei einem hohen Kühlbedarf den Luftstrom zu unterstützen, weisen gattungsgemäße Kühler oftmals zudem einen Lüfter auf, der z. B. mittels eines Motorabtriebs oder separaten Elektromotor angetrieben werden kann.

Insbesondere im landwirtschaftlichen Bereich sowie bei Einsätzen auf Baustellen sind vorgenannte Fahrzeuglüfter/Kühler oftmals einem erhöhtem Staub- und Schmutzaufkommen (z. B. Schlamm, Insekten, Pflanzenteile etc.) ausgesetzt. Diese Verunreinigungen können sich auf dem Kühler/Lüfter absetzten und damit den Luftdurchsatz bzw. dessen Leistungsfähigkeit verringern.

Im Fall von verbrennungsmotorisch angetriebenen Fahrzeugen besteht aufgrund der vom Verbrennungsmotor üblicherweise erzeugten Vibrationen ein gewisser "Selbstreinigungseffekt", insbesondere gegenüber größeren Partikeln. Nachteilig ist jedoch oftmals, dass aufgrund der zumeist starren Kopplung des Lüfters zur Kurbelwelle des Motors (z. B. über einen Riementrieb) eine Drehrichtungsumkehr des Lüfters und damit ein Ausblasen der angelösten Verunreinigungen nicht möglich ist.

Im Fall von elektromotorisch angetriebenen Fahrzeugen ist problematisch, dass dort in der Regel keine niederfrequenten Vibrationen aus dem Zündschlag erzeugt werden und damit ein Selbstreinigungseffekt durch Verbrennungsmotorschwingungen nicht gegeben ist. Ferner entfällt bei elektrisch angetriebenen Fahrzeugen (z. B. beim Einsatz von Radnabenmotoren oder beim Einsatz von zentral bzw. fahrzeugmittig angeordneten Antriebsmotoren) eine unmittelbare mechanische Kopplung zwischen Motor und Kühlersystem, so dass selbst für den Fall, dass Motorvibrationen auftreten würden, diese aufgrund der fehlenden Nähe zum Lüfter/Kühler dort in der Regel keine ausreichende Reinigungswirkung erzielen.

Entsprechend ist es Aufgabe der Erfindung eine im Vergleich zum Stand der Technik verbesserte Möglichkeit zur Kühlerreinigung bereitzustellen. Insbesondere ist es Aufgabe der Erfindung eine Lösung bereitzustellen, mittels derer eine verschmutzungsbedingte Abnahme der Kühlleistung bei einem Lüfter und/oder Kühler möglichst vermieden werden kann.

Diese Aufgabe kann mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Lösungsgedanken wird ein Verfahren zum Reinigen einer Kühlvorrichtung bereitgestellt. Dieses kann im Folgenden auch kurz als "Reinigungsverfahren" bezeichnet werden. Bevorzugt handelt es sich bei der vorgenannten Kühlvorrichtung um eine Kühlvorrichtung für ein Kraftfahrzeug (z. B. für einen PKW, LKW oder Omnibus). Die Kühlvorrichtung weist dabei einen Wärmetauscher (z. B. einen Kühlmittelkühler) und einen elektrischen Antriebsmotor (z. B. einen Drehstrommotor) auf, wobei der Antriebsmotor (z. B. über eine Lüfterhaube) mit dem Wärmetauscher verbunden ist. Weiterhin umfasst die Kühlvorrichtung ein Lüfterrad (z. B. ein Axiallüfterrad), das trieblich mit dem Antriebsmotor verbunden ist. Das Lüfterrad kann somit mittels des Antriebsmotors angetrieben und/oder in Rotation versetzt werden.

Ferner ist vorgesehen, dass das Reinigungsverfahren ein Betreiben der Kühlvorrichtung in einem Rüttelbetrieb aufweist. Der Rüttelbetrieb soll dabei ein Steuern einer Bestromung des Antriebsmotors zur Erzeugung einer Rüttelbewegung des Wärmetauschers, des Antriebsmotors und/oder des Lüfterrads umfassen. Erfindungsgemäß dient die Rüttelbewegung dabei zum Abschütteln und/oder Lösen von Verunreinigungen (wie z. B. Staub, Insekten und/oder Pflanzenteilen) von der Kühlvorrichtung (z. B. vom Wärmetauscher, dem Antriebsmotor und/oder dem Lüfterrad). Im Fall, dass die Kühlvorrichtung zusätzlich auch eine Lüfterhaube umfasst, kann die Rüttelbewegung zudem oder alternativ auch eine Rüttelbewegung der Lüfterhaube umfassen. Unter einer "Rüttelbewegung" kann hierbei bevorzugt eine periodische oder aperiodische schwingende Bewegung der entsprechenden Komponente(n) verstanden werden. Beispielsweise kann die Rüttelbewegung dabei ein Ruckeln, ein Wackeln und/oder Vibrieren der entsprechenden Komponente(n) mit einer bestimmten Vibrationsfrequenz umfassen. Auf vorteilhafte Weise kann durch ein derartiges zeitweises gezieltes Anregen einer - im Normalbetrieb in Hinblick auf Lärm und Verschleiß üblicherweise unterdrückten - Rüttelbewegung ein "Selbstreinigen" der Kühlvorrichtung erreicht werden, indem typische Verschmutzungen der Kühlvorrichtung durch Resonanzeffekte und/oder ruckartige Bewegungen (ähnlich einem Teppichklopfereffekt ggf. unter Ausnutzung eines systemimmanenten und/oder definierten Axialspiels im Lüfterantrieb) von den Komponenten der Kühlvorrichtung abgelöst und/oder abgeschüttelt werden können. Besonders vorteilhaft ist dabei, dass dazu keine Einwirkung "von außen", z. B. ein menschliches und/oder maschinelles Säubern, notwendig ist, sondern allein durch ein verändertes Ansteuern der bei gattungsgemäßen Kühlern zumeist vorhandenen Komponenten erfolgen kann. Entsprechend kann auf vorteilhafte Weise auch ein Anbringen zusätzlicher Reinigungskomponenten an der Kühlvorrichtung entfallen.

Gemäß einem ersten Aspekt kann die Rüttelbewegung eine, vorzugsweise gezielt induzierte, Vibration zum Abschütteln von Verunreinigungen und/oder eine, vorzugsweise gezielt induzierte, schwingende Bewegung zum Abschütteln von Verunreinigungen umfassen. Bevorzugt handelt es sich bei den Verunreinigungen dabei um Staub, Reifenabrieb, Schlamm, Insekten und/oder Pflanzenteile (wie z. B. Grannen und/oder Blätter). Unter dem Ausdruck "gezielt induziert" kann dabei bevorzugt verstanden werden, dass die entsprechende Rüttelbewegung bewusst herbeigeführt wird. D. h. mit anderen Worten, dass es sich bei der entsprechenden Rüttelbewegung nicht lediglich um eine ggf. unerwünschte Randerscheinung und/oder einen ggf. unerwünschten Seiteneffekt handelt.

Nach einem weiteren Aspekt kann die Rüttelbewegung eine Frequenz im Bereich von 30 Hz bis 3 kHz, vorzugsweise zwischen 50 Hz und 2 kHz, aufweisen. Durch vorteilhaftes Ausnutzen von Resonanzeffekten, können die niederfrequenten Bereiche (z. B. bis 300 Hz) dabei bevorzugt zum Lösen und/oder Abschütteln von massiveren Verschmutzungen dienen, wohingegen höherfrequente Bereiche (z. B. zwischen 300 Hz und 2 kHz) bevorzugt zum Lösen und/oder Abschütteln von sehr leichten Verschmutzungen dienen können. Beispielsweise kann das Verfahren in diesem Zusammenhang ein Steuern der Bestromung des Antriebsmotors zur gezieltes Anregung einer Rüttelbewegung mit einer oder mehrerer, vorzugsweise vorbestimmter, Frequenzen, bevorzugt im Bereich zwischen 30 Hz und 3 kHz, aufweisen. Alternativ kann das Verfahren auch ein Steuern der Bestromung des Antriebsmotors zum Durchfahren eines, vorzugsweise vorbestimmten, Frequenzbereichs umfassen.

Zudem oder alternativ kann die Rüttelbewegung eine Frequenz aufweisen, die einer Resonanzfrequenz der Kühlvorrichtung entspricht. In Abhängigkeit der Kopplung zwischen den jeweiligen Kühlvorrichtungskomponenten kann die "Resonanzfrequenz der Kühlvorrichtung" dabei eine Resonanzfrequenz des (quasi freien) Wärmetauschers, Antriebsmotors oder Lüfterrads oder des Gesamtsystems oder einer Untergruppe hiervon sein. Zum Bestimmen entsprechender Resonanzfrequenzen der Kühlvorrichtung kann beispielsweise ein möglichst großer Frequenzbereich durchfahren bzw. durchgestimmt werden und Frequenzen mit hohen bzw. maximalen Rüttelamplituden ermittelt werden, welche sodann im Reinigungsbetrieb, d. h. bei Durchführung des beanspruchten Reinigungsverfahrens, gezielt angeregt werden.

Zudem oder alternativ kann die Rüttelbewegung eine Amplitude aufweisen, die größer ist als während eines Nicht-Reinigungsbetriebs der Kühlvorrichtung. Der Nicht-Reinigungsbetrieb kann dabei bevorzugt ein Kühlbetrieb der Kühlvorrichtung (z. B. ein Sauglüfter- oder Drucklüfterbetrieb) sein, in dem vorrangig ein den Wärmetauscher kühlendender Luftstrom erzeugt wird. Alternativ kann der Nicht-Reinigungsbetrieb auch ein anderer Betrieb der Kühlvorrichtung sein, welcher nicht gerade der Durchführung des beanspruchten Reinigungsverfahrens entspricht.

Nach einem weiteren Aspekt der Erfindung kann das Steuern der Bestromung des Antriebsmotors zur Erzeugung der Rüttelbewegung zumindest eine der unten beschriebenen Möglichkeiten umfassen. Dabei kann generell, d. h. unabhängig von der konkreten Ausführung im Einzelfall, unter dem "Steuern der Bestromung" bevorzugt ein Steuern eines (z. B. im Fall eines Einphasenmotors) oder mehrerer (z. B. im Fall eines Drehstrommotors) im Antriebsmotor fließender Ströme (z. B. deren Stärke, Phase und/oder Frequenz) verstanden werden. Dies kann beispielsweise ein Variieren einer oder mehrerer am Antriebsmotor anliegender Versorgungsspannungen (z. B. in Stärke, Phase und/oder Frequenz) umfassen. Lediglich beispielhaft kann das Steuern im Fall eines dreiphasigen Antriebsmotors über ein Ansteuern eines dem Antriebsmotor vorgeschalteten bekannten H-Brückenbausteins erfolgen. Durch ein entsprechendes Takten der in üblichen H-Brückenbausteinen zumeist verwendeten IGBTs kann auf einfache Weise nicht nur die Abgabeleistung des Antriebsmotors eingeregelt werden, sondern eben auch die Gleichförmigkeit der Drehbewegung dessen Rotorwelle beeinflusst werden.

Speziell zur Erzeugung der Rüttelbewegung kann das Steuern der Bestromung dabei ein gestückeltes Bestromen des Antriebsmotors umfassen. Beispielsweise kann der Antriebsmotor für eine gewisse Zeitspanne mit Strom versorgt werden und anschließend für eine gewisse Zeitspanne abgeschaltet sein, wobei diese Sequenz fortdauernd wiederholt wird. Mit anderen Worten kann das gestückelte Bestromen einen ständigen Wechsel aus "An-Phasen" und "Aus-Phasen" des Antriebsmotors umfassen.

Ferner kann das Steuern der Bestromung ein, vorzugsweise periodisches, Gegenstrombremsen des Antriebsmotors umfassen. Darunter kann bevorzugt ein, bevorzugt zeitweises, Abbremsen des Antriebsmotors, z. B. durch eine rotationshemmende Bestromung, verstanden werden. Neben einem Umpolen der Versorgungsspannung kann dies z. B. im Fall eines Drehstromasynchronmotors auch durch Vertauschen zweier Außenleiter erfolgen. Auf vorteilhafte Weise können dadurch gezielt Rüttelbewegungen (wie z. B. ein Vibrieren und/oder Ruckeln) induziert werden.

Weiterhin kann das Steuern der Bestromung zur Erzeugung der Rüttelbewegung ein Erzeugen von, vorzugsweise periodischen, Drehrichtungswechseln des Antriebsmotors umfassen. Beispielsweise können dazu im schnellen Wechsel Drehrichtungsänderungen (Linkslauf/Rechtslauf) vorgenommen werden. Entsprechend kann somit auch von einem, vorzugsweise provozierten oszillierenden, Drehrichtungs-Pendelbetrieb des Antriebsmotors bzw. des Lüfterrads gesprochen werden.

Weiterhin kann das Steuern der Bestromung ein Erzeugen einer, vorzugsweisen periodischen, Drehungleichförmigkeit des Antriebsmotors umfassen. Beispielsweise kann der Antriebsmotor dazu, vorzugsweise in regelmäßigen Abständen, zeitweise beschleunigt werden. Mit anderen Worten kann z. B. ein oszillierender Drehzahlverlauf erzeugt werden, um dadurch vorzugsweise eine statische Unwucht zu simulieren. Vorzugsweise handelt es sich bei der dadurch erzeugten Rüttelbewegung somit um eine unwuchterregte Schwingung, wobei der Antriebsmotor selbst bevorzugt keine statische Unwucht aufweisen soll.

Weiterhin kann das Steuern der Bestromung ein Überlagern von zumindest zwei der vorgenannten Möglichkeiten umfassen. Insgesamt kann damit auf vorteilhafte Weise allein durch ein entsprechendes Ansteuern des - bei gattungsgemäßen Vorrichtungen oftmals bereits vorhandenen - Antriebsmotors des Lüfters eine Rüttelbewegung der Kühlvorrichtungskomponenten bewirkt werden, sodass auf vorteilhafte Weise auf zusätzliche das Ablösen der Verunreinigungen auslösende Komponenten (wie z. B. das Anbringen eines zusätzlichen (statischen) Unwuchtmotors) verzichtet werden kann.

Gemäß einem weiteren Aspekt kann das Steuern der Bestromung zur Erzeugung der Rüttelbewegung ein pulsmoduliertes Ansteuern des Antriebsmotors mit einer vorbestimmten Pulsabfolge umfassen. Beispielsweise kann das Ansteuern ein - im Stand der Technik grundsätzlich bekanntes - pulsweitenmoduliertes, pulsfrequenzmoduliertes und/oder pulsphasenmoduliertes Ansteuern umfassen, wobei diese Techniken vorliegend bevorzugt zur gezielten Anregung einer schwingenden Bewegung, z. B. durch Erzeugen einer Drehungleichförmigkeit, verwendet werden sollen. Hierzu kann an den Antriebsmotor z. B. eine Versorgungsspannung angelegt werden, die eine festgelegte Abfolge von Pulsen (z. B. Rechteckpulsen) aufweist, welche eine entsprechende Rüttelbewegung der Kühlvorrichtungskomponenten bewirken.

Hierzu kann nach einem weiteren Aspekt die Pulsabfolge von einer für einen Gleichlauf des Antriebsmotors erforderlichen Pulsabfolge abweichen. Mit anderen Worten kann die zur Ansteuerung des Antriebsmotors verwendete Pulsabfolge eine einen Ungleichlauf des Antriebsmotors bewirkende Pulsabfolge sein. Beispielsweise können dazu bestimmte Pulsperioden, d. h. definierte Einheiten aus einem Puls und einer Pause, einer für einen Gleichlauf des Antriebsmotors erforderlichen Pulsabfolge modifiziert werden (z. B. die Pulsbreite und/oder Pulsphasenlage der Pulse innerhalb der Pulsperioden variiert werden). Auf vorteilhafte Weise kann so ein gezielt von einem ruhigen Gleichlauf des Motors abweichender Rüttelbetrieb induziert werden.

Zudem oder alternativ kann das Ansteuern ein (z. B. periodisches) Variieren von Pulsen der vorbestimmten Pulsabfolge umfassen. Leidglich beispielhaft können dazu z. B. On-Off-Zyklen verlängert oder verkürzt werden, On-Off-Zyklen der Bestromung ausgesetzt werden und/oder Phasenverschiebungen der Pulse vorgenommen werden. Vorzugsweise umfasst das Variieren von Pulsen somit ein Verändern einer Pulsbreite und/oder Pulsphasenlage der Pulse innerhalb der vorbestimmten Pulsabfolge. Dabei kann die vorbestimmte Pulsabfolge z. B. eine für einen Gleichlauf des Antriebsmotors erforderliche Pulsabfolge sein.

Gemäß einem weiteren Aspekt kann der Antriebsmotor ein Hochvolt-Antriebsmotor sein. Vorzugsweise kann unter dem Ausdruck "Hochvolt-Antriebsmotor" dabei ein Antriebsmotor verstanden werden, der mit einer Wechselspannung zwischen 30 V und 1 kV und/oder mit einer Gleichspannung zischen 60 V und 1,5 kV, besonders bevorzugt zwischen 400 V und 850 V, betreibbar ist. Beispielsweise kann der Hochvolt-Antriebsmotor als Drehstrom-Asynchronmaschine ausgebildet sein, die mit Hochvolt-Drehstrom betreibbar ist. Auf vorteilhafte Weise kann dadurch insgesamt eine hohe Kühlleistung der Kühlvorrichtung erzielt werden.

Nach einem weiteren Aspekt kann das Reinigungsverfahren ferner ein Betreiben der Kühlvorrichtung in einem ersten Luftstromförderbetrieb umfassen. Der erste Luftstromförderbetrieb kann dabei ein Drehen des Lüfterrads in einer ersten Drehrichtung (z. B. einen Linkslauf des Lüfterrads) zur Erzeugung eines ersten Luftstroms umfassen. Bevorzugt dient der erste Luftstromförderbetrieb bzw. der erste Luftstrom dabei zum Abtransport von Verunreinigungen. Beispielsweise kann in diesem Zusammenhang zunächst durch den Rüttelbetrieb ein An- bzw. Ablösen von Verunreinigungen erfolgen, welche sodann im ersten Luftstromförderbetrieb aufgewirbelt und von der Kühlvorrichtung wegtransportiert werden. Zusätzlich kann im ersten Luftstromförderbetrieb dabei auch ein Steuern der Bestromung zur Erzeugung einer Rüttelbewegung erfolgen. Mit anderen Worten kann quasi eine Art Mischbetrieb aus Rütteln und Luftstromförderung vorgesehen sein. Alternativ kann der erste Luftstromförderbetrieb auch ausschließlich ein Drehen des Lüfterrads zur Erzeugung des ersten Luftstroms (ohne Rütteln) zum Abtransport von Verunreinigungen umfassen.

Zudem oder alternativ kann das Reinigungsverfahren ferner ein Betreiben der Kühlvorrichtung in einem zweiten Luftstromförderbetrieb umfassen. Der zweite Luftstromförderbetrieb kann dabei ein Drehen des Lüfterrads in einer zweiten Drehrichtung (z. B. einen Rechtslauf des Lüfterrads) zur Erzeugung eines zweiten Luftstroms umfassen. Bevorzugt ist dabei die zweite Drehrichtung der ersten Drehrichtung entgegengesetzt und/oder der zweite Luftstrom dem ersten Luftstrom entgegensetzt. Bevorzugt dient auch der zweite Luftstromförderbetrieb bzw. der zweite Luftstrom zum Abtransport von Verunreinigungen. In einer lediglich beispielhaften Ausführung kann zunächst durch den Rüttelbetrieb ein An- bzw. Ablösen von Verunreinigungen erfolgen, welche sodann durch ein Betreiben im zweiten Luftstromförderbetrieb aus der Kühlvorrichtung ausgeblasen werden. Bevorzugt handelt es sich bei dem zweiten Luftstrom dabei um einen von der Kühlvorrichtung weg gerichteten Luftstrom und/oder einen Luftstrom, der entgegen der Strömungsrichtung im (normalen) Kühlbetrieb der Kühlvorrichtung gerichtet ist. Auch im zweiten Luftstromförderbetrieb kann dabei zusätzlich auch ein Steuern der Bestromung zur Erzeugung einer Rüttelbewegung, d. h. ein Mischbetrieb aus Rütteln und Luftstromförderung, erfolgen. Alternativ kann der zweite Luftstromförderbetrieb auch ausschließlich ein Drehen des Lüfterrads zur Erzeugung des zweiten Luftstroms (ohne Rütteln) zum Abtransport von Verunreinigungen umfassen.

Um dabei auf vorteilhafte Weise eine möglichst umfassende Reinigung der Kühlvorrichtung zu erzielen kann dabei vorgesehen sein, dass das Betreiben der Kühlvorrichtung im Rüttelbetrieb und im ersten Luftstromförderbetrieb und/oder im zweiten Luftstromförderbetrieb in einer vorbestimmten, d. h. zuvor festgelegten, zeitlichen Abfolge erfolgt. Beispielsweise kann das Reinigungsverfahren ein Betreiben der Kühlvorrichtung im Rüttelbetrieb für 1 Minute und anschließend ein Betreiben der Kühlvorrichtung im ersten Luftstromförderbetrieb für 2 Minuten umfassen, wobei ggf. auch ein mehrfaches, z. B. dreifaches, Wiederholen dieser Sequenz vorgesehen sein kann. In diesem Zusammenhang kann die vorbestimmte zeitliche Abfolge bevorzugt auch als vorgegebener Betriebsablauf oder ein vorgegebenes Reinigungsprogramm verstanden werden.

Gemäß einem weiteren Aspekt kann die vorbestimmte zeitliche Abfolge das Betreiben der Kühlvorrichtung im Rüttelbetrieb, im ersten Luftstromförderbetrieb und im zweiten Luftstromförderbetrieb umfassen. Mit anderen Worten kann die vorbestimmte zeitliche Abfolge alle drei vorgenannten Betriebsweisen umfassen. Beispielsweise kann die Abfolge folgenden definierten Ablauf aufweisen: Rechtslauf - Linkslauf - Rütteln - Rechtslauf - Linkslauf - Rütteln - Rechtslauf - Linkslauf - Rütteln - etc. Auf vorteilhafte Weise kann durch die Kombination der verschiedenen Betriebsweisen ein möglichst optimaler Selbstreinigungseffekt erzielt werden.

Nach einem weiteren Aspekt kann das Betreiben der Kühlvorrichtung im Rüttelbetrieb und/oder im ersten Luftstromförderbetrieb und/oder im zweiten Luftstromförderbetrieb ein zumindest zweitweises Betreiben des Elektromotors mit einer maximalen Drehzahl und/oder einer maximalen Leistung umfassen. Zudem oder alternativ kann das Betreiben der Kühlvorrichtung im Rüttelbetrieb und/oder im ersten Luftstromförderbetrieb und/oder im zweiten Luftstromförderbetrieb ein zumindest zweitweises Betreiben des Elektromotors mit einer im Vergleich zum Nicht-Reinigungsbetrieb erhöhten Drehzahl und/oder erhöhten Leistung umfassen. Bevorzugt liegt die Drehzahl und/oder Leistung über einer im normalen Kühlbetrieb der Kühlvorrichtung verwendeten Drehzahl und/oder Leistung. Auf vorteilhafte Weise kann so bedarfsgerecht ein stärkerer Luftstrom erzeugt werden, um dadurch das Ablösen und/oder das Abtransportieren von Verunreinigungen zu begünstigen.

Ferner betrifft die Erfindung eine Kühlvorrichtung. Vorzugsweise handelt es sich bei der Kühlvorrichtung um eine Kühlvorrichtung für ein Kraftfahrzeug (z. B. für einen PKW, LKW oder Omnibus). Die entsprechende Kühlvorrichtung weist dabei einen Wärmetauscher (z. B. einen Kühlmittelkühler) und einen elektrischen Antriebsmotor (z. B. einen Drehstrommotor) auf, wobei der Antriebsmotor (z. B. über eine Lüfterhaube) mit dem Wärmetauscher verbunden ist. Weiterhin umfasst die Kühlvorrichtung ein Lüfterrad (z. B. ein Axiallüfterrad), das trieblich mit dem Antriebsmotor verbunden ist. Ferner umfasst die Kühlvorrichtung eine Steuereinrichtung (z. B. ein Steuergerät). Die Steuereinrichtung kann dabei mit dem Antriebsmotor signaltechnisch verbunden sein (z. B. über eine entsprechende Steuer- bzw. Signalleitung) oder direkt in den Antriebsmotor integriert sein. Die Steuereinrichtung soll ferner eingerichtet sein, ein Verfahren zur Reinigung der Kühlvorrichtung, wie in diesem Dokument beschrieben ist, auszuführen. Dabei sollen die im Zusammenhang mit dem Reinigungsverfahren beschrieben Merkmale auch im Zusammenhang mit der Kühlvorrichtung als offenbart gelten und beanspruchbar sein. Entsprechendes soll auch umgekehrt gelten. Beispielsweise kann die Steuereinrichtung zur Durchführung eines Reinigungsmodus eingerichtet sein, wobei der Reinigungsmodus ein Steuern der Bestromung des Elektromotors zur Erzeugung einer Rüttelbewegung des Wärmetauschers, des Antriebsmotors und/oder des Lüfterrads, vorzugsweise zum Abschütteln von Verunreinigungen, umfasst.

Gemäß einem ersten Aspekt kann die Kühlvorrichtung ferner eine Diagnoseeinrichtung umfassen. Die Diagnoseeinrichtung kann dabei ein Teil der vorgenannten Steuereinrichtung sein oder eine hiervon separate Einheit (z. B. eine Komponente eines zentralen Fahrzeugsteuergeräts) sein. Die Diagnoseeinrichtung kann signaltechnisch (z. B. über eine entsprechende Steuer- bzw. Signalleitung) mit der Steuereinrichtung verbunden sein. Ferner kann die Diagnoseeinrichtung ausgebildet sein, ein von einer Verschmutzung der Kühlvorrichtung (z. B. von einer Zusetzung des Wärmetauschers) abhängiges Verschmutzungssignal zu erzeugen. Beispielsweise kann die Diagnoseeinrichtung eingerichtet sein, das Verschmutzungssignal beim Überschreiten einer vorbestimmten Verschmutzung (z. B. Zusetzung) der Kühlvorrichtung auszugeben. Bevorzugt ist die Diagnoseeinrichtung dabei ausgebildet, ein von einem Grad der Verschmutzung der Kühlvorrichtung (z. B. von einem Grad der Zusetzung des Wärmetauschers) abhängiges Verschmutzungssignal zu erzeugen. Lediglich beispielhaft kann die Diagnoseeinrichtung dabei optische und/oder kapazitive Sensoren zur direkten Erfassung der Verschmutzung bzw. des Grads der Verschmutzung umfassen. Zudem oder alternativ kann die Diagnoseeinrichtung auch eine Stromaufnahme des Antriebsmotors, eine Kühlleistung der Kühlvorrichtung, eine Drehzahl des Lüfterrads und/oder eine andere von der Verschmutzung der Kühlvorrichtung abhängige Größe mittels geeigneter Sensorik auswerten, um durch deren Abweichung von einem sauberen Referenzzustand die Verschmutzung bzw. den Grad der Verschmutzung zu bestimmen. Beispielsweise würde bei völliger Zusetzung eines Kühlernetzes des Wärmetauschers die Drehzahl des Lüfters stark ansteigen, da es zum Pumpen im Vakuum innerhalb der Lüfterhaube/Lüfterzarge (z. B. einem trichterförmig geschlossenen Bereich zwischen Kühlernetz und Lüfter) kommt, was z. B. zur Verschmutzungsdetektion verwendet werden könnte. Weiterhin kann die Steuereinrichtung eingerichtet sein, das Verfahren zum Reinigen der Kühlvorrichtung in Abhängigkeit des Verschmutzungssignals (z. B. bei Überschreiten eines vorbestimmten Verschmutzungssignalschwellenwerts), vorzugsweise selbsttätig, zu initiieren. Das "Initiieren" kann dabei im Allgemeinen ein unmittelbares Starten des Reinigungsverfahrens sein oder aber auch ein Bestimmen bzw. Planen eines, vorzugsweise zeitnahen, Zeitpunkts, an dem das Reinigungsverfahren durchgeführt werden wird. Auf vorteilhafte Weise kann dadurch eine bedarfsgerechte autarke Selbstreinigung der Kühlvorrichtung bereitgestellt werden, wodurch ggf. unnötige Reinigungsvorgänge möglichst vermieden werden können.

Um auf vorteilhafte Weise ein "planvolles" Starten des Reinigungsverfahrens zu ermöglichen, d. h. bei ggf. unerwünschten (Betriebs-)Situationen der Kühlvorrichtung bzw. des Kraftfahrzeugs (wie z. B. bei einem Parken in einer geschlossenen Garage und/oder nachts) ein Starten des Reinigungsverfahrens zu verschieben, kann nach einem weiteren Aspekt, die Kühlvorrichtung ferner eine Zustandserfassungseinrichtung umfassen. Die Zustandserfassungseinrichtung kann hierbei ein Teil der vorgenannten Steuereinrichtung und/oder Diagnoseeinrichtung sein oder eine hiervon separate Einheit (z. B. eine Komponente eines zentralen Fahrzeugsteuergeräts) sein. Weiterhin kann die Zustandserfassungseinrichtung ausgebildet sein, ein von einer Betriebszustandsinformation der Kühlvorrichtung (z. B. ob diese gerade deaktiviert ist) und/oder einer Betriebszustandsinformation des Kraftfahrzeugs (z. B. ob dieses parkt, fährt und/oder lädt) und/oder einer Umgebungsinformation (z. B. der Tageszeit) der Kühlvorrichtung und/oder des Kraftfahrzeugs abhängiges Zustandssignal zu erzeugen. Lediglich beispielhaft kann die Umgebungsinformation hierbei eine Ortsinformation umfassen, z. B. ob sich die Kühlvorrichtung bzw. das Kraftfahrzeug auf einer Autobahn, einer Landstraße, einem Acker, einem Betriebshof, einem Parkplatz in einem Außenbereich und/oder einem Parkplatz in einem Innenbereich (z. B. Garage und/oder Halle) befindet. Zudem oder alternativ kann die Umgebungsinformation eine Zeitinformation umfassen, z. B. ob es Tag oder Nacht ist. Zudem oder alternativ kann die Umgebungsinformation auch eine Umfeldinformation umfassen, z. B. ob sich aktuell Personen und/oder Gegenstände (z. B. eine Hauswand) unmittelbar vor der Kühlvorrichtung bzw. dem Kraftfahrzeug befinden und/oder ob am Standort Restriktionen hinsichtlich Geräusch und/oder (Fein-)Staubemissionen bestehen. All diese Informationen ermöglichen dabei auf vorteilhafte Weise ein Zustandssignal zu generieren, welches als Maß dafür verwendet werden kann, ob ein Durchführen des Reinigungsverfahrens in Hinblick auf den (aktuellen) Betriebs- und/oder Umgebungszustand der Kühlvorrichtung bzw. des Kraftfahrzeugs ratsam bzw. möglich ist. Hierbei kann die Steuereinrichtung eingerichtet sein, das Verfahren zum Reinigen der Kühlvorrichtung in Abhängigkeit des Zustandssignals (z. B. bei einem Vorliegen oder Nicht-Vorliegen eines vorbestimmten Zustandssignalwerts) zu initiieren. D. h., bevorzugt kann die Steuereinrichtung eingerichtet sein, ein Starten bzw. Planen des Reinigungsverfahrens auf Grundlage des Zustandssignals vorzunehmen, wodurch auf vorteilhafte Weise ein ggf. aufgrund des aktuellen Betriebs- und/oder Umgebungszustands unerwünschtes Starten des Reinigungsverfahrens (z. B. innerhalb eines geschlossenen Raums) möglichst vermieden werden kann.

Weiterhin betrifft die Erfindung ein Kraftfahrzeug (z. B. einen PKW), wobei das Kraftfahrzeug eine Kühlvorrichtung, wie in diesem Dokument beschrieben ist, umfasst. Dabei sollen wiederum alle im Zusammenhang mit der Kühlvorrichtung selbst bzw. dem Verfahren zur Reinigung der Kühlvorrichtung beschriebenen Merkmale, auch im Zusammenhang mit dem Kraftfahrzeug offenbart und beanspruchbar sein. Entsprechendes soll auch umgekehrt gelten. In einer besonders bevorzugten Variante kann die Kühlvorrichtung dabei mittels einer Dreipunktlagerung mit geeigneten Entkopplungselementen (z. B. Gummipuffer) am Kraftfahrzeug gehaltert sein. Hierdurch kann auf vorteilhafte Weise erreicht werden, dass sich die definiert erzwungene Rüttelbewegung einerseits energiearm erzeugen lässt und andererseits sich der bisweilen harsche Reinigungsvorgang aus Komfortgründen nicht übermäßig, sondern nur gedämpft auf das Kraftfahrzeug überträgt. Bevorzugt handelt es sich bei dem Kraftfahrzeug dabei um ein Nutzfahrzeug. Unter dem Ausdruck "Nutzfahrzeug" kann hierbei insbesondere ein Kraftfahrzeug verstanden werden, das durch seine Bauart und Einrichtung speziell zum Transport von Gütern und/oder zum Ziehen ein oder mehrerer (z. B. landwirtschaftlicher) Anhängerfahrzeuge ausgelegt ist. Beispielsweise kann das Nutzfahrzeug ein Lastkraftwagen, ein Sattelschlepper, ein Baustellenfahrzeug und/oder eine landwirtschaftliche Maschine (z. B. ein Traktor) sein.

Nach einem Aspekt kann das Kraftfahrzeug ein Elektrofahrzeug sein. Unter dem Ausdruck "Elektrofahrzeug" kann dabei bevorzugt ein Kraftfahrzeug verstanden werden, welches, vorzugsweise ausschließlich, mittels elektrischer Energie (z. B. aus einem Traktionsenergiespeicher) antreibbar ist. Beispielsweise kann es sich bei dem Elektrofahrzeug um einen E-Traktor oder ein E-Baustellenfahrzeug handeln. Weiterhin kann das besagte Elektrofahrzeug ein Hochvolt-Bordnetz aufweisen, über das der Antriebsmotor, bevorzugt ein Hochvolt-Antriebsmotor, der Kühlvorrichtung mit elektrischen Energie versorgbar ist. Beispielsweise kann das Hochvolt-Bordnetz dazu einen Traktionsenergiespeicher (z. B. eine Lithium-Hochvoltbatterie) und einen Inverter umfassen, wobei der Traktionsenergiespeicher über einen Inverter mit dem Antriebsmotor verbunden oder verbindbar ist. Das Hochvolt-Bordnetz kann hierbei eine Gleichspannung zwischen 60 V bis 1,5 kV, vorzugsweise zwischen 400 V und 850 V, aufweisen. Auf vorteilhafte Weise kann so ein vom Motorbetrieb unabhängiger Antrieb des Lüfters realisiert werden, wobei durch die Anbindung an das Hochvolt-Bordnetz insbesondere auch die Verwendung leistungsstarker Antriebsmotoren ermöglicht wird.

Die zuvor beschriebenen Aspekte und Merkmale der Erfindung sind beliebig miteinander kombinierbar, solange dass sie unter den Schutzumfang der Ansprüche fallen.

Weitere Einzelheiten und Vorteile der Erfindung werden im Folgenden unter Bezugnahme auf die beigefügten Zeichnungen beschrieben. Es zeigen:
- Figur 1:: eine schematische Darstellung einer Kühlvorrichtung gemäß einer ersten Ausführungsform in einem ersten Betriebszustand;
- Figur 2:: eine schematische Darstellung der Kühlvorrichtung gemäß der ersten Ausführungsform in einem zweiten Betriebszustand; und
- Figur 3:: eine schematische Darstellung einer Kühlvorrichtung gemäß einer weiteren Ausführungsform.

Gleiche oder funktional äquivalente Elemente sind in allen Figuren mit denselben Bezugszeichen beschrieben und zum Teil nicht gesondert beschrieben.

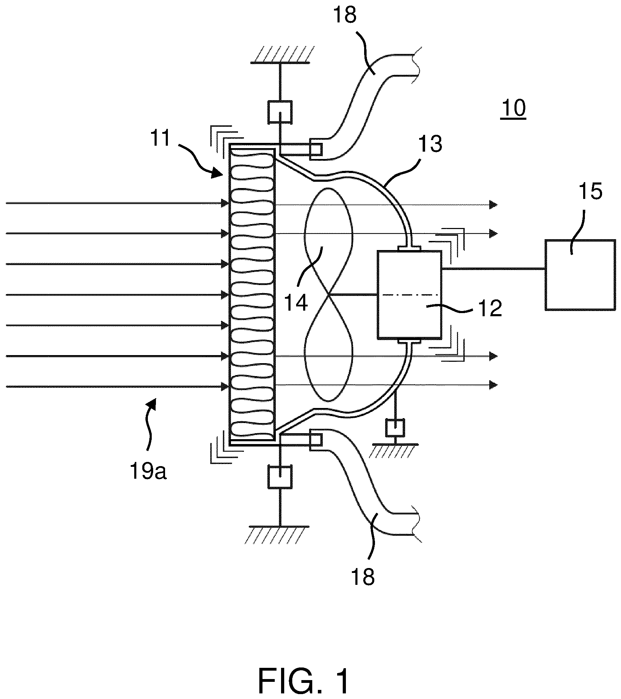

Figur 1 zeigt eine schematische Darstellung einer Kühlvorrichtung 10 gemäß einer ersten Ausführungsform in einem ersten Betriebszustand. Die Kühlvorrichtung 10, welche z. B. zur Traktionsbatterie-, Ladeluft-, und/oder Ölkühlung bei einem Kraftfahrzeug 20 verwendet werden kann, weist einen Wärmetauscher 11 (z. B. einen Kühlmittelkühler mit einem Kühlernetz) auf. Dieser kann z. B. von einem, vorzugsweise flüssigen, Wärmeträger durchströmbar sein und/oder mit einem Kühl- bzw. Kältemittelkreislauf des Kraftfahrzeugs 20 (z. B. über entsprechende Rohr- und/oder Schlauchverbindungen 18) verbindbar sein. Lediglich beispielsweise kann der Wärmetauscher 11 fluidisch mit einer Pumpe, einem Heizer und/oder einer Traktionsbatterie verbunden sein. Ferner umfasst die Kühlvorrichtung 10 einen elektrischen Antriebsmotor 12 (z. B. einen Drehstrommotor), der mit dem mit dem Wärmetauscher 11, vorzugsweise vibrationsübertragend, verbunden ist. Leidglich beispielhaft kann die Kühlvorrichtung 10 dazu - wie dargestellt - eine, vorzugsweise trichterförmige, Lüfterhaube 13 (z. B. einen Luftkasten) aufweisen, über die der Antriebsmotor 12 mit dem Wärmetauscher 11 verbunden ist. Bevorzugt weist der Antriebsmotor 12 selbst dabei keine statische Unwucht auf. Weiterhin umfasst die Kühlvorrichtung 10 ein Lüfterrad 14 (z. B. ein Axiallüfterrad), das trieblich mit dem Antriebsmotor 12 verbunden ist. Beispielsweise kann das Lüfterrad 14 eine Nabe aufweisen, in der eine Welle des Antriebsmotors 12 befestigt ist. Bevorzugt weist die Welle bzw. die Lüfterlagerung dabei ein systemimmanentes und/oder definiertes Axialspiel auf, um - wie nachfolgend noch eingehender beschrieben werden wird - das Erzeugen bzw. Anregen einer Rüttelbewegung in der Kühlvorrichtung 10 zu begünstigen. Ferner umfasst die Kühlvorrichtung 10 eine Steuereinrichtung 15 (z. B. ein Steuergerät). Die Steuereinrichtung 15 kann dabei - wie beispielhaft dargestellt - mit dem Antriebsmotor 12 zu dessen Steuerung (z. B. über eine Signalleitung) signaltechnisch verbunden sein. Ferner kann die Steuereinrichtung 15, z. B. über einen CAN-Bus, mit weiteren Fahrzeugsteuergeräten (z. B. einem Mastersteuergerät eines Chillersystems und/oder einem zentralen Bordrechner) verbunden sein. Die Steuereinrichtung 15 soll ferner eingerichtet sein, ein Verfahren zur Reinigung der Kühlvorrichtung 10 , wie in diesem Dokument beschrieben ist, auszuführen. Mit anderen Worten kann die Steuereinrichtung 15 zum Steuern einer Bestromung des Antriebsmotors 12 zur Erzeugung einer Rüttelbewegung des Wärmetauschers 11, des Antriebsmotors 12, und/oder Lüfterrads 14 eingerichtet sein. Lediglich beispielhaft kann die Steuereinrichtung 15 hierbei eingerichtet sein, zur Erzeugung der Rüttelbewegung den Antriebsmotors 12 gestückelt zu bestromen und/oder mit, vorzugsweise periodischen, Drehrichtungswechsel zu betreiben. Bevorzugt dient die hierdurch induzierte Rüttelbewegung dabei einem Abschütteln von Verunreinigungen (wie z. B. Staub, Insekten und/oder Pflanzenteile) von der Kühlvorrichtung 10. In Figur 1 ist die Kühlvorrichtung 10 dabei in einem leidglich beispielhaften ersten Betriebszustand gezeigt, in dem zusätzlich oder alternativ zu einer Rüttelbewegung auch eine Luftstromförderung (siehe Strömungspfeile) erfolgt. Dies kann z. B. durch ein Drehen des Lüfterrads 14 in einer ersten Drehrichtung (z. B. einen Linkslauf des Lüfterrads 14) zur Erzeugung eines ersten Luftstroms 19a erfolgen. Bevorzugt dient der erste Luftstrom 19a neben einem Kühlen des Wärmetauschers 11 dabei auch zum Abtransport von gelösten bzw. abgeschüttelten Verunreinigungen. Die Kühlvorrichtung 10 kann ferner z. B. eine Dreipunktlagerung mit geeigneten Entkopplungselementen zur Befestigung der Kühlvorrichtung 10 am Kraftfahrzeug 20 umfassen. Hierdurch kann auf vorteilhafte Weise erreicht werden, dass sich die definiert erzwungene Rüttelbewegung einerseits energiearm erzeugen lässt und andererseits sich der bisweilen harsche Reinigungsvorgang aus Komfortgründen nicht übermäßig, sondern nur gedämpft auf das Kraftfahrzeug 20 überträgt.

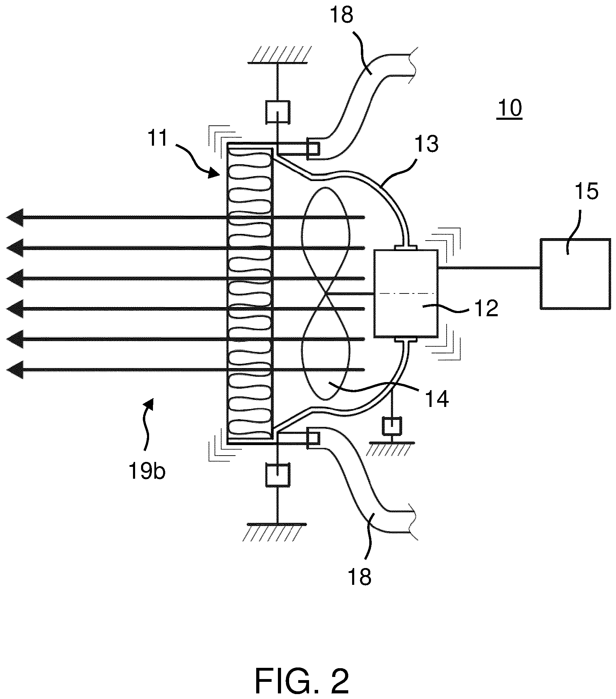

Demgegenüber zeigt Figur 2 eine schematische Darstellung der Kühlvorrichtung 10 gemäß der ersten Ausführungsform in einem zweiten Betriebszustand. Auch hier erfolgt - lediglich beispielhaft - zusätzlich oder alternativ zu einer Rüttelbewegung auch eine Luftstromförderung (siehe Strömungspfeile), jedoch ist der hierbei erzeugte zweite Luftstrom 19b dem vormals in Figur 1 dargestellten ersten Luftstrom 19a gerade entgegengesetzt. Das Erzeugen des zweiten Luftstroms 19b kann dabei z. B. durch ein Drehen des Lüfterrads 14 in einer, der ersten Drehrichtung entgegengesetzten, zweiten Drehrichtung (z. B. einen Rechtslauf des Lüfterrads 14) erfolgen. Alternativ kann das Erzeugen des zweiten Luftstroms 19b auch - bei gleicher Drehrichtung des Antriebsmotors 12 - durch entsprechende Kupplung- und/oder Umlenkelemente und/oder Ändern einer Ausrichtung von verstellbaren Flügelelementen des Lüfterrads 14 erfolgen. Bevorzugt handelt es sich bei dem zweiten Luftstrom 19b dabei um einen von der Kühlvorrichtung 10 weg gerichteten Luftstrom zum Ausblasen von gelösten bzw. abgeschüttelten Verunreinigungen aus der Kühlvorrichtung 10. Um dabei auf vorteilhafte Weise eine möglichst umfassende Reinigung der Kühlvorrichtung 10 zu erzielen kann ferner auch vorgesehen sein, dass die Kühlvorrichtung 10 in einer vorbestimmten zeitlichen Abfolge aus vorgenannten Betriebsweisen betrieben wird. Beispielsweise kann ein mehrfaches Wiederholen der Sequenz aus 1 Minute Rüttelbetrieb, 1 Minute erster Luftstromförderbetrieb, 1 Minute Rüttelbetrieb und 1 Minute zweiter Luftstromförderbetrieb vorgesehen sein.

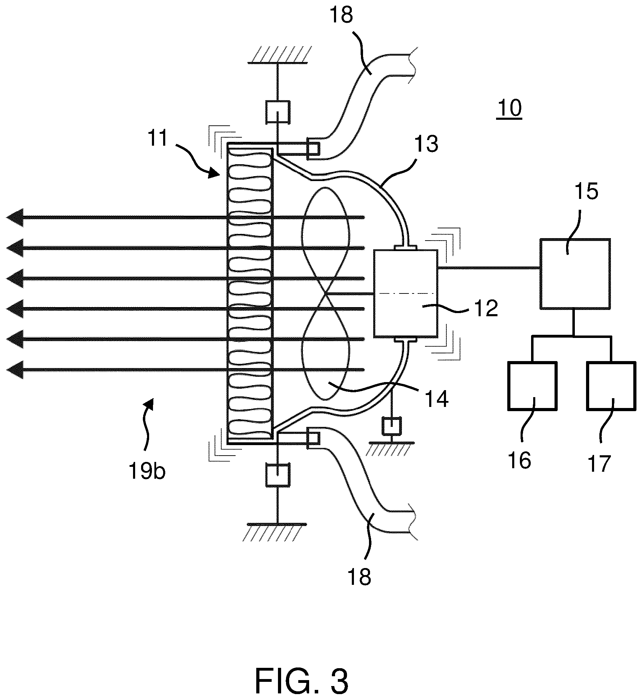

Figur 3 zeigt eine schematische Darstellung einer Kühlvorrichtung 10 gemäß einer weiteren Ausführungsform. Zusätzlich zu der vorstehend beschriebenen Ausführungsform umfasst die hier dargestellte Kühlvorrichtung 10 ferner zwei weitere optionale Komponenten, nämlich eine Diagnoseeinrichtung 16 und eine Zustandserfassungseinrichtung 17. Die Diagnoseeinrichtung 16, welche z. B. signaltechnisch (z. B. über eine entsprechende Steuer- bzw. Signalleitung) mit der Steuereinrichtung 15 verbunden sein kann, kann hierbei ausgebildet sein, ein von einer Verschmutzung der Kühlvorrichtung 10 (z. B. von einer Zusetzung des Wärmetauschers 11) abhängiges Verschmutzungssignal S_{V} zu erzeugen. Lediglich beispielhaft kann die Diagnoseeinrichtung 16 dazu einen (nicht dargestellten) Sensor (z. B. eine Kameraeinrichtung) zur direkten Erfassung der Verschmutzung bzw. des Grads der Verschmutzung umfassen. Zudem oder alternativ kann die Diagnoseeinrichtung 16 auch eine von der Verschmutzung der Kühlvorrichtung 10 abhängige Größe (z. B. eine Stromaufnahme des Antriebsmotors 12, eine Kühlleistung der Kühlvorrichtung 10, eine Drehzahl des Lüfterrads 14) überwachen. Weiterhin kann die Steuereinrichtung 15 eingerichtet sein, das Verfahren zum Reinigen der Kühlvorrichtung 10 in Abhängigkeit von S_{V} (z. B. bei Überschreiten eines vorbestimmten Verschmutzungssignalschwellenwerts), vorzugsweise selbsttätig, zu initiieren.

Um dabei auf vorteilhafte Weise ein "planvolles" Starten des Reinigungsverfahrens zu ermöglichen, d. h. bei ggf. unerwünschten (Betriebs-)Situationen der Kühlvorrichtung 10 (z. B. zur Beachtung der Geräuschvorschriften des Bundesimmissionsgesetzes) ein Starten des Reinigungsverfahrens zu verschieben, umfasst die vorliegende beispielhafte Kühlvorrichtung 10 ferner eine Zustandserfassungseinrichtung 17. Diese kann dabei signaltechnisch (z. B. über eine entsprechende Steuer- bzw. Signalleitung) mit der Steuereinrichtung 15 und/oder der Diagnoseeinrichtung 16 verbunden sein. Ferner kann die Zustandserfassungseinrichtung 17 beispielhaft ausgebildet sein, ein von einer Betriebszustandsinformation der Kühlvorrichtung 10 (z. B. ob diese gerade deaktiviert ist) und/oder einer Umgebungsinformation (z. B. der Tageszeit) der Kühlvorrichtung 10 abhängiges Zustandssignal S_{Z} zu erzeugen. Beispielsweise kann die Zustandserfassungseinrichtung 17 hierzu entsprechende (nicht dargestellte) Sensoren (z. B. einen Helligkeitssensor) umfassen. Weiterhin kann die Steuereinrichtung 15 eingerichtet sein, das Verfahren zum Reinigen der Kühlvorrichtung 10 in Abhängigkeit des Zustandssignals S_{Z} (z. B. bei einem Vorliegen oder Nicht-Vorliegen eines vorbestimmten Zustandssignalwerts) zu initiieren, wodurch auf vorteilhafte Weise ein ggf. aufgrund des aktuellen Betriebs- und/oder Umgebungszustands unerwünschtes Starten des Reinigungsverfahrens (z. B. innerhalb eines geschlossenen Raums) möglichst vermieden werden kann.

### Bezugszeichenliste

- 10: Kühlvorrichtung
- 11: Wärmetauscher
- 12: Antriebsmotor
- 13: Lüfterhaube
- 14: Lüfterrad
- 15: Steuereinrichtung
- 16: Diagnoseeinrichtung
- 17: Zustandserfassungseinrichtung
- 18: Rohr- und/oder Schlauchverbindung
- 19a: Erster Luftstrom
- 19b: Zweiter Luftstrom
- 20: Kraftfahrzeug
- S_{V}: Verschmutzungssignal
- S_{Z}: Zustandssignal

## Patentansprüche

1. Verfahren zum Reinigen einer Kühlvorrichtung (10) für ein Kraftfahrzeug (20),
wobei die Kühlvorrichtung (10) einen Wärmetauscher (11), einen elektrischen Antriebsmotor (12), der, vorzugsweise über eine Lüfterhaube (13), mit dem Wärmetauscher (11) verbunden ist; und ein Lüfterrad (14), das trieblich mit dem Antriebsmotor (12) verbunden ist, umfasst, **dadurch gekennzeichnet, dass**
das Verfahren aufweist:
- Betreiben der Kühlvorrichtung (10) in einem Rüttelbetrieb, umfassend ein Steuern einer Bestromung des Antriebsmotors (12) zur Erzeugung einer Rüttelbewegung des Wärmetauschers (11), des Antriebsmotors (12), und/oder des Lüfterrads (14) zum Abschütteln von Verunreinigungen von der Kühlvorrichtung (10).

2. Verfahren nach Anspruch 1, **dadurch gekennzeichnet, dass** die Rüttelbewegung eine gezielt induzierte Vibration und/oder schwingende Bewegung zum Abschütteln von Verunreinigungen, vorzugsweise zum Abschütteln von Staub, Insekten und/oder Pflanzenteilen, umfasst.

3. Verfahren nach einem der vorherigen Ansprüche, **dadurch gekennzeichnet, dass** die Rüttelbewegung
a) eine Frequenz im Bereich von 30 Hz bis 3 kHz aufweist; und/oder
b) eine Frequenz aufweist, die einer Resonanzfrequenz der Kühlvorrichtung (10) entspricht; und/oder
c) eine Amplitude aufweist, die größer ist als während eines Nicht-Reinigungsbetriebs der Kühlvorrichtung (10).

4. Verfahren nach einem der vorherigen Ansprüche, **dadurch gekennzeichnet, dass** das Steuern der Bestromung des Antriebsmotors (12) zur Erzeugung der Rüttelbewegung
a) ein gestückeltes Bestromen des Antriebsmotors (12) umfasst; und/oder
b) ein, vorzugsweise periodisches, Gegenstrombremsen des Antriebsmotors (12) umfasst; und/oder
c) ein Erzeugen von, vorzugsweise periodischen, Drehrichtungswechseln des Antriebsmotors (12) umfasst; und/oder
d) ein Erzeugen einer, vorzugsweisen periodischen, Drehungleichförmigkeit des Antriebsmotors (12) umfasst; und/oder
e) ein Überlagern von zumindest zwei der in a) bis d) genannten Möglichkeiten umfasst.

5. Verfahren nach einem der vorherigen Ansprüche, **dadurch gekennzeichnet, dass** das Steuern der Bestromung zur Erzeugung der Rüttelbewegung ein pulsmoduliertes, vorzugsweise pulsweitenmoduliertes, Ansteuern des Antriebsmotors (12) mit einer vorbestimmten Pulsabfolge umfasst.

6. Verfahren nach Anspruch 5, **dadurch gekennzeichnet,**
a) **dass** die Pulsabfolge von einer für einen Gleichlauf des Antriebsmotors (12) erforderlichen Pulsabfolge abweicht; und/oder
b) **dass** das Ansteuern ein, vorzugsweise periodisches, Variieren von Pulsen der vorbestimmten Pulsabfolge umfasst, vorzugweise ein Verändern einer Pulsbreite und/oder Pulsphasenlage der Pulse.

7. Verfahren nach einem der vorherigen Ansprüche, **dadurch gekennzeichnet, dass** der Antriebsmotor (12) ein Hochvolt-Antriebsmotor ist.

8. Verfahren nach einem der vorherigen Ansprüche, **gekennzeichnet durch** ein
- Betreiben der Kühlvorrichtung (10) in einem ersten Luftstromförderbetrieb, umfassend ein Drehen des Lüfterrads (14) in einer ersten Drehrichtung zur Erzeugung eines ersten Luftstroms (19a), vorzugweise zum Abtransport von Verunreinigungen; und/oder
- Betreiben der Kühlvorrichtung (10) in einem zweiten Luftstromförderbetrieb, umfassend ein Drehen des Lüfterrads (14) in einer, vorzugsweise der ersten Drehrichtung entgegengesetzten, zweiten Drehrichtung zur Erzeugung eines, vorzugsweise dem ersten Luftstrom entgegengesetzten, zweiten Luftstroms (19b), vorzugweise zum Abtransport von Verunreinigungen;
wobei das Betreiben der Kühlvorrichtung (10) im Rüttelbetrieb und im ersten Luftstromförderbetrieb und/oder im zweiten Luftstromförderbetrieb in einer vorbestimmten zeitlichen Abfolge erfolgt.

9. Verfahren nach Anspruch 8, **dadurch gekennzeichnet, dass** die vorbestimmte zeitlichen Abfolge das Betreiben der Kühlvorrichtung (10) im Rüttelbetrieb, im ersten Luftstromförderbetrieb und im zweiten Luftstromförderbetrieb umfasst.

10. Verfahren nach Anspruch 8 oder 9, **dadurch gekennzeichnet, dass** das Betreiben der Kühlvorrichtung (10) im Rüttelbetrieb und/oder im ersten Luftstromförderbetrieb und/oder im zweiten Luftstromförderbetrieb ein zumindest zweitweises Betreiben des Elektromotors (12) mit einer maximalen Drehzahl und/oder einer maximaler Leistung umfasst.

11. Kühlvorrichtung (10) für ein Kraftfahrzeug (20) aufweisend:
- einen Wärmetauscher (11);
- einen elektrischen Antriebsmotor (12), der, vorzugsweise über eine Lüfterhaube (13), mit dem Wärmetauscher (11) verbunden ist;
- ein Lüfterrad (14), das trieblich mit dem Antriebsmotor (12) verbunden ist; und
- eine Steuereinrichtung (15), die eingerichtet ist, ein Verfahren zur Reinigung der Kühlvorrichtung (10) nach einem der vorhergehenden Ansprüche auszuführen.

12. Kühlvorrichtung nach Anspruch 11, **dadurch gekennzeichnet, dass** die Kühlvorrichtung (10) eine Diagnoseeinrichtung (16) umfasst, die ausgebildet ist, ein von einer Verschmutzung, vorzugsweise von einem Grad der Verschmutzung, der Kühlvorrichtung (10) abhängiges Verschmutzungssignal (S_{V}) zu erzeugen; wobei die Steuereinrichtung (15) eingerichtet ist, das Verfahren zum Reinigen der Kühlvorrichtung (10) in Abhängigkeit des Verschmutzungssignals (S_{V}) selbsttätig zu initiieren.

13. Kühlvorrichtung (10) nach Anspruch 11 oder 12, **gekennzeichnet durch** eine Zustandserfassungseinrichtung (17), die ausgebildet ist, ein von einer Betriebszustandsinformation und/oder einer Umgebungsinformation, z. B. einer Zeit-, Orts-, und/oder Umfeldinformation, der Kühlvorrichtung (10) und/oder des Kraftfahrzeugs (20) abhängiges Zustandssignal (S_{Z}) zu erzeugen; wobei die Steuereinrichtung (15) eingerichtet ist, das Verfahren zum Reinigen der Kühlvorrichtung (10) in Abhängigkeit des Zustandssignal (S_{Z}) zu initiieren.

14. Kraftfahrzeug (20), vorzugsweise Nutzfahrzeug, **gekennzeichnet durch** eine Kühlvorrichtung (10) nach einem der Ansprüche 11 bis 13.

15. Kraftfahrzeug (20) nach Anspruch 14, **dadurch gekennzeichnet, dass** das Kraftfahrzeug (20) ein Elektrofahrzeug ist, aufweisend ein Hochvolt-Bordnetz, über das der Antriebsmotor (12) der Kühlvorrichtung (10) mit elektrischer Energie versorgbar ist.

## Claims

1. A method for cleaning a cooling device (10) for a motor vehicle (20),
the cooling device (10) comprising a heat exchanger (11), an electric drive motor (12) connected to the heat exchanger (11), preferably via a fan cover (13); and a fan wheel (14) that is operatively connected to the drive motor (12), **characterised in that** the method comprises:
operating the cooling device (10) in a shaking mode, comprising controlling a current supply to the drive motor (12) to generate a shaking movement of the heat exchanger (11), the drive motor (12) and/or the fan wheel (14) to shake impurities off the cooling device (10).

2. A method according to claim 1, **characterised in that** the shaking movement comprises a deliberately induced vibration and/or oscillating movement for shaking off impurities, preferably for shaking off dust, insects and/or plant parts.

3. A method according to one of the previous claims, **characterised in that** the shaking movement
a) has a frequency in the range of 30 Hz to 3 kHz; and/or
b) has a frequency that corresponds to a resonant frequency of the cooling device (10); and/or
c) has an amplitude that is greater than during a non-cleaning operation of the cooling device (10).

4. A method according to one of the preceding claims, **characterized in that** controlling the energization of the drive motor (12) to generate the vibrating motion comprises:
a) a pulsed energization of the drive motor (12); and/or
b) a, preferably periodic, counter-current braking of the drive motor (12); and/or
c) a generation of, preferably periodic, changes in the direction of rotation of the drive motor (12); and/or
d) a generation of a, preferably periodic, non-uniform rotation of the drive motor (12);
and/or
e) a superimposition of at least two of the possibilities mentioned in a) to d).

5. A method according to one of the previous claims, **characterised in that** controlling the energisation to generate the vibratory movement comprises a pulse-modulated, preferably pulse-width modulated, driving of the drive motor (12) with a predetermined pulse sequence.

6. A method according to claim 5, **characterised in that**
a) the pulse sequence differs from a pulse sequence required for synchronisation of the drive motor (12); and/or
b) the control comprises a preferably periodic variation of pulses of the predetermined pulse sequence, preferably a changing of a pulse width and/or pulse phase angle of the pulses.

7. A method according to one of the previous claims, **characterised in that** the drive motor (12) is a high-voltage drive motor.

8. A method according to one of the previous claims, **characterised by**
- operating the cooling device (10) in a first air flow conveying mode, comprising rotating the fan wheel (14) in a first direction of rotation to generate a first air flow (19a), preferably for removing impurities; and/or
operating the cooling device (10) in a second air-stream conveying mode, comprising a rotation of the fan wheel (14) in a second direction of rotation, preferably opposite the first direction of rotation, for generating a second air stream (19b), preferably opposite the first air stream, preferably for the removal of impurities;
wherein the cooling device (10) is operated in the shaking mode mode and in the first air current conveying mode and/or in the second air current conveying mode in a predetermined temporal sequence.

9. A method according to claim 8, **characterised in that** the predetermined temporal sequence comprises operating the cooling device (10) in the shaking mode, in the first air current conveying mode and in the second air current conveying mode.

10. A method according to claim 8 or 9, **characterised in that** the operation of the cooling device (10) in the shaking mode and/or in the first air flow conveying mode and/or in the second air flow conveying mode comprises an at least intermittent operation of the electric motor (12) at a maximum speed and/or a maximum power.

11. A cooling device (10) for a motor vehicle (20), comprising:
- a heat exchanger (11);
- an electric drive motor (12) which is connected to the heat exchanger (11), preferably via a fan cover (13);
- a fan wheel (14) that is operatively connected to the drive motor (12); and
- a control means (15) that is configured to execute a method for cleaning the cooling device (10) according to one of the preceding claims.

12. A cooling device according to claim 11, **characterised in that** the cooling device (10) comprises a diagnostic device (16) configured to generate a contamination signal (S_{V}) dependent on a contamination, preferably on a degree of contamination, of the cooling device (10); wherein the control means (15) is configured to automatically initiate the procedure for cleaning the cooling device (10) automatically in dependence on the fouling signal (S_{V}).

13. A cooling device (10) according to claim 11 or 12, **characterised by** a state detection device (17) configured to generate a state signal (S_{Z}) dependent on operating state information and/or ambient information, e.g. time, location and/or environment information, of the cooling device (10) and/or the motor vehicle (20) ; wherein the control means (15) is configured to initiate the process for cleaning the cooling device (10) in dependence on the status signal (S_{Z}).

14. A motor vehicle (20), preferably a utility vehicle, **characterised by** a cooling device (10) according to one of claims 11 to 13.

15. A motor vehicle (20) according to claim 14, **characterised in that** the motor vehicle (20) is an electric vehicle comprising a high-voltage electrical system via which the drive motor (12) of the cooling device (10) can be supplied with electric energy.

## Revendications

1. Un procédé de nettoyage d'un arrangement de refroidissement (10) pour un véhicule automobile (20), l'arrangement de refroidissement (10) comprenant un échangeur de chaleur (11), un moteur d'entraînement électrique (12) qui est relié à l'échangeur de chaleur (11), de préférence par le biais d'un capot de ventilateur (13) ; et une roue de ventilateur (14), qui est reliée de manière motrice au moteur d'entraînement (12), **caractérisé en ce que** le procédé comprend :
- fonctionnement de l'arrangement de refroidissement (10) dans un mode de secouage, comprenant une commande d'une mise sous tension du moteur d'entraînement (12) en vue de générer un mouvement de secouage de l'échangeur de chaleur (11), du moteur d'entraînement (12) et/ou de la roue de ventilateur (14) afin d'éliminer par secouage les impuretés de l'arrangement de refroidissement (10).

2. Le procédé selon la revendication 1, **caractérisé en ce que** le mouvement de secouage comprend une vibration et/ou un mouvement oscillatoire induits de manière ciblée pour éliminer par secouage des impuretés, de préférence pour éliminer par secouage de la poussière, des insectes et/ou des parties de plantes.

3. Le procédé selon l'une des revendications précédentes, **caractérisé en ce que** le mouvement de secouage
a) présente une fréquence dans la plage de 30 Hz à 3 kHz ; et/ou
b) présente une fréquence qui correspond à une fréquence de résonance de l'arrangement de refroidissement (10) ; et/ou
c) présente une amplitude qui est supérieure à celle pendant un fonctionnement non en nettoyage de l'arrangement de refroidissement (10).

4. Le procédé selon l'une des revendications précédentes, **caractérisé en ce que** la commande de la mise sous tension du moteur d'entraînement (12) en vue de générer le mouvement de secouage
a) comprend une mise sous tension fractionnée du moteur d'entraînement (12) ; et/ou
b) comprend un freinage à contre-courant, de préférence périodique, du moteur d'entraînement (12) ; et/ou
c) comprend une génération de changements de sens de rotation, de préférence périodiques, du moteur d'entraînement (12) ; et/ou
d) comprend une génération d'une irrégularité de rotation, de préférence périodique, du moteur d'entraînement (12) ; et/ou
e) comprend une superposition d'au moins deux des possibilités mentionnées aux points a) à d).

5. Le procédé selon l'une des revendications précédentes, **caractérisé en ce que** la commande de mise sous tension en vue de générer le mouvement de secouage comprend une commande à modulation d'impulsions, de préférence à modulation de largeur d'impulsions, du moteur d'entraînement (12) avec une séquence d'impulsions prédéterminée.

6. Le procédé selon la revendication 5, caractérisé a) en ce que la séquence d'impulsions s'écarte d'une séquence d'impulsions nécessaire pour un fonctionnement synchrone du moteur d'entraînement (12) ; et/ou b) en ce que la commande comprend une variation, de préférence périodique, d'impulsions de la séquence d'impulsions prédéterminée, de préférence une variation d'une largeur d'impulsion et/ou d'une position de phase d'impulsion des impulsions.

7. Le procédé selon l'une des revendications précédentes, **caractérisé en ce que** le moteur d'entraînement (12) est un moteur d'entraînement à haute tension.

8. Le procédé selon l'une des revendications précédentes, **caractérisé par** un
- fonctionnement de l'arrangement de refroidissement (10) dans un premier mode de transport de flux d'air, comprenant la rotation de la roue de ventilateur (14) dans un premier sens de rotation en vue de générer un premier flux d'air (19a), de préférence pour évacuer des impuretés ; et/ou
- fonctionnement de l'arrangement de refroidissement (10) dans un deuxième mode de transport de flux d'air, comprenant une rotation de la roue de ventilateur (14) dans un deuxième sens de rotation, de préférence opposé au premier sens de rotation, en vue de générer un deuxième flux d'air (19b), de préférence opposé au premier flux d'air, de préférence pour évacuer des impuretés ;
le fonctionnement de l'arrangement de refroidissement (10) dans le mode de secouage et dans le premier mode de transport de flux d'air et/ou dans le deuxième mode de transport de flux d'air s'effectuant dans une séquence temporelle prédéterminée.

9. Le procédé selon la revendication 8, **caractérisé en ce que** la séquence temporelle prédéterminée comprend le fonctionnement de l'arrangement de refroidissement (10) dans le mode de secouage, dans le premier mode de transport de flux d'air et dans le deuxième mode de transport de flux d'air.

10. Le procédé selon la revendication 8 ou 9, **caractérisé en ce que** le fonctionnement de l'arrangement de refroidissement (10) dans le mode de vibration et/ou dans le premier mode de transport de flux d'air et/ou dans le deuxième mode de transport de flux d'air comprend un fonctionnement au moins en temporaire du moteur électrique (12) à une vitesse de rotation maximale et/ou à une puissance maximale.

11. Un arrangement de refroidissement (10) pour un véhicule automobile (20), possédant :
- un échangeur de chaleur (11) ;
- un moteur d'entraînement électrique (12) qui est relié à l'échangeur de chaleur (11), de préférence par le biais d'un capot de ventilateur (13) ;
- une roue de ventilateur (14), qui est reliée de manière motrice au moteur d'entraînement (12) ; et
- un dispositif de commande (15), qui est conçu pour mettre en œuvre un procédé de nettoyage de l'arrangement de refroidissement (10) selon l'une des revendications précédentes.

12. L'arrangement de refroidissement selon la revendication 11, **caractérisé en ce que** l'arrangement de refroidissement (10) comprend un dispositif de diagnostic (16), qui est configuré pour générer un signal d'encrassement (Sᵥ) dépendant d'un encrassement, de préférence d'un degré d'encrassement, de l'arrangement de refroidissement (10) ; le dispositif de commande (15) étant conçu pour initier automatiquement le procédé de nettoyage de l'arrangement de refroidissement (10) en fonction du signal d'encrassement (Sᵥ).

13. L'arrangement de refroidissement (10) selon la revendication 11 ou 12, **caractérisé par** un dispositif de détection d'état (17), qui est configuré pour générer un signal d'état (S_{z}) dépendant d'une information d'état de fonctionnement et/ou d'une information d'environnement, par exemple une information de temps, de lieu et/ou de milieu ambiant, de l'arrangement de refroidissement (10) et/ou du véhicule automobile (20) ; le dispositif de commande (15) étant conçu pour initier le procédé de nettoyage de l'arrangement de refroidissement (10) en fonction du signal d'état (S₂) .

14. Un véhicule automobile (20), de préférence un véhicule utilitaire, **caractérisé par** un arrangement de refroidissement (10) selon l'une des revendications 11 à 13.

15. Le véhicule automobile (20) selon la revendication **14, caractérisé en ce que** le véhicule automobile (20) est un véhicule électrique, possédant un réseau de bord à haute tension, par le biais duquel le moteur d'entraînement (12) de l'arrangement de refroidissement (10) peut être alimenté en énergie électrique.
